# EUROPÄISCHE PATENTSCHRIFT

(11) **EP 0 875 286 B1**
(45) Veröffentlichungstag und Bekanntmachung des Hinweises auf die Patenterteilung: **19.05.2004**
(21) Anmeldenummer: 98104427.4
(22) Anmeldetag: 12.03.1998
(51) Int. Cl.: B01D 65/02, B01D 63/06

(54) **Filtervorrichtung mit Membranmodul**
Filtering device with membrane module
Dispositif de filtrage avec module à membrane

(30) Priorität: 29.04.1997 DE 19718028
(43) Veröffentlichungstag der Anmeldung: 04.11.1998
(73) Patentinhaber: Hydac Process Technology GmbH, 66538 Neunkirchen (DE)
(72) Erfinder: Wnuk, Ralf, Dr.-Ing., 66450 Bexbach (DE); Winter, Martin, 66620 Nonnweiler (DE); Böttcher, Thomas, Dipl.-Ing., 70186 Stuttgart (DE); Petersen, Klaus-Jürgen, Dipl.-Ing., 66111 Saarbrücken (DE)
(74) Vertreter: Patentanwälte Bartels und Partner

(56) Entgegenhaltungen:
- EP-A- 0 062 549
- EP-A- 0 298 735
- EP-A- 0 321 104
- DE-A- 3 621 724
- DE-U- 8 306 970
- FR-A- 2 716 385

## Beschreibung

Die Erfindung betrifft eine Filtervorrichtung, umfassend eine Rückspülvorrichtung und mehrere parallel geschaltete Filtermodule sowie ein Filtergehäuse gemäß der Merkmalsausgestaltung des Oberbegriffes des Patentanspruches 1.

Mit den angesprochenen Membranmodulen lassen sich eine Vielzahl von Verfahren, wie Mikrofiltration, Ultrafiltration, Nanofiltration und Umkehrosmose oder Verfahrens-Kombinationen hiervon zum Einsatz bringen. So lassen sich beispielsweise mit der Mikrofiltration biologisch vorbehandelte Siedlungsabwasser u. dgl. reinigen. Vorzugsweise werden als Membranmodule sog. Kapillarmembranelemente eingesetzt. Kapillarmembranen erlauben eine hohe Packungsdichte und gute Anpaßbarkeit an die jeweilige Filtrationsaufgabe. Innerhalb der Filtervorrichtung können aber auch Konfigurationen, wie Flachmembranen sowie Rohr- und Hohlfasermembranen eingesetzt werden.

Seit den 80er Jahren gehört die sog. Cross Flow-Mikrofiltration zum Stand der Technik auch in großtechnischen Anwendungen und basierte auf der Entwicklung hochresistenter Membranen aus Werkstoffen, wie Polyethersulfon, Polypropylen oder Polyaramid. Obwohl die Cross Flow-Mikrofiltration in vielen Applikationen zwischenzeitlich ein wirtschaftliches Niveau für die Permeat- bzw. Filtratleistung erreichen läßt, verhindert der für die Cross Flow-Technik notwendige vergleichsweise hohe Energiebedarf den Einsatz dieser Verfahren bei der Aufbereitung sehr großer Volumenströme.

Durch die zwischenzeitlich erfolgte Realisierung des sog. Dead-End-Modus beim Filtrationsvorgang konnte der Energiebedarf drastisch gesenkt werden, wobei der Dead-End-Modus eine periodische Spülung in festgelegten intervallmäßig durchzuführenden Reinigungsschritten vorsieht. Durch diese Art der Reinigung ergeben sich hier sehr wirtschaftlich erzielbare stabile Leistungskurven für das Permeat.

Bei den bekannten Anlagen, die mit Membranmodulen ausgestattet sind, wird bei dem vorbeschriebenen Betrieb im Dead-End-Modus die Anlage und mithin alle Membranmodule mit einem konstanten Permeatfluß in Umkehrrichtung durchströmt und damit diese abgereinigt. Durch diese periodische Rückspülung mit Permeat aller Membranmodule, bei der das Permeat rückwärts durch die Membran gepreßt und dabei die retentatseitig auf der Membranoberfläche aufgebaute Deckschicht abgelöst wird, was regelmäßig mehrmals täglich geschieht, steht die Anlage für eine weitere Filtration nicht zur Verfügung, was die Filtrationsleistung herabsetzt.

Durch die DE-OS 21 15 882 ist eine Filtervorrichtung bekannt, bei der mehrere Membranmodule parallel zueinander geschaltet im Filtratraum angeordnet sind. Diese bekannte Vorrichtung dient dem Reinigen von Wasser über eine umgekehrte Osmose zum Erzeugen von reinem Frischwasser durch Entfernen aufgelöster Stoffe aus einem unter Druck stehenden und verhältnismäßig unreinen Speisewasser.
Durch die DE-OS 23 27 989 ist es des weiteren bekannt, bei parallel geschalteten Modulen einen Teil rückzuspülen, während gleichzeitig mit dem anderen Teil weiter filtriert wird. Diese bekannten Lösungen bauen groß auf und ihr Betrieb ist nicht ohne weiteres automatisierbar.

Durch die DE 83 06 970 U ist eine gattungsgemäße Filtervorrichtung bekannt, umfassend eine Rückspülvorrichtung und mehrere parallel geschaltete Filtermodule sowie ein Filtergehäuse, das Anschlüsse für einen Feed-Strom und das Permeat aufweist und einen Zuführraum sowie einen Filtratraum umfaßt, in den der jeweilige Feed-Strom-Anschluß bzw. Permeat-Anschluß mündet, wobei die Filtermodule in dem gemeinsamen Filtratraum angeordnet sind und wobei die Rückspülvorrichtung ein Antriebsteil aufweist, mit dem die stirnseitigen zylindrischen Öffnungen der zu reinigenden Filtermodule ansteuerbar sind, indem er diese überdeckt, während die anderen Filtermodule gleichzeitig für die Filtration freigegeben sind. Bei der bekannten Lösung sind die Filtermodule als Spaltsiebrohr-Filterelemente konventioneller Bauart ausgebildet und über den Feed-Strom-Anschluß des bekannten Filtergehäuses wird verschmutztes Fluid zugeführt, das über die Spaltsiebrohr-Filterelemente abgereinigt den Filtratraum über den Permeat-Anschluß der bekannten Filtervorrichtung verläßt.

Die an den glatten Innenflächen der Spaltsiebrohr-Filterelemente ausfiltrierten Verunreinigungen bewirken einen allmählichen Anstieg des Differenzdruckes zwischen Schmutzseite (Feed-Seite) und Reinseite (Permeat-Seite). Bei Erreichen eines voreinstellbaren maximalen Differenzdruck-Grenzwertes versetzt ein den Differenzdruck zwischen Feed- und Permeat-Seite messendes Wechsel-Differenzdruck-Kontaktmanometer durch einen Kontaktschalter parallel zum Filtrationsprozeß und ohne dessen Unterbrechung einen in Ruhestellung befindlichen Rotationsarm der Rückspülvorrichtung über einen Antriebsteil in Form eines Motors in eine Drehbewegung und löst damit den Vorgang der Selbstreinigung der Spaltsiebrohr-Filterelemente durch Rückspülung mit Eigenmedium aus dem Reinraum (Filtratraum) aus.

Ausgehend von diesem Stand der Technik liegt der Erfindung die Aufgabe zugrunde, eine Filtervorrichtung zu schaffen, mit der es möglich ist, Mikrofiltrationen, Ultrafiltrationen, Nanofiltrationen und Umkehrosmose oder Verfahrens-Kombinationen durchzuführen und dabei automatisch einen Teil der Membranmodule zur Filtration einzusetzen und den anderen Teil entsprechend dem Rückspülmodus abzureinigen und die platzsparend aufbaut. Eine dahingehende Aufgabe löst eine Filtervorrichtung mit den Merkmalen des Patentanspruches 1 in seiner Gesamtheit.

Mit den Merkmalen des Anspruches 1, die vorsehen, daß die Filtervorrichtung in einem Filtratraum mehrere Membranmodule parallel zueinander geschaltet aufnimmt, ist die Voraussetzung gegeben, die vorstehend beschriebene Aufgabe zu lösen. Durch die angesprochene Parallelschaltung der Membranmodule kann ein Teil der Membranmodule im Cross Flow-Betrieb dem jeweiligen Filtrationsschritt dienen und die anderen Membranmodule können gleichzeitig parallel gefahren im Dead-End-Modus betrieben und abgereinigt werden. Das aus den zur Filtration vorgesehenen Membranmodulen austretende Permeat oder Filtrat wird dabei im Gegenstrom zum Spülen oder Reinigen der anderen Membranmodule eingesetzt, indem das reine Filtrat oder Permeat entgegen der Filtrationsrichtung nunmehr von außen nach innen die Abreinigung übernimmt.

Dadurch, daß das Filtergehäuse mindestens einen Retentatanschluß aufweist, der in einen Abführraum des Filtergehäuses mündet, kann das in den Membranmodulen entstehende Retentat über einen zum Filtratraum und dem Zuführraum eigenständigen Retentatraum aus dem Filtergehäuse abgeführt werden.

Dadurch, daß die Rückspülvorrichtung einen Antriebsteil aufweist, mit dem die stirnseitigen zylindrischen Öffnungen der zu reinigenden Membranmodule ansteuerbar sind, indem er diese überdeckt, während die anderen Membranmodule gleichzeitig für die Filtration freigegeben sind, ist ein besonders platzsparender Aufbau der Filtervorrichtung erreicht.

Dadurch, daß auf den Fluidaustritt am Permeat-Anschluß ein regelbares Drosselventil einwirkt, läßt sich über das dahingehend regelbare Drosselventil die für die Rückspülung notwendige Druckdifferenz aufbauen und so die Rückspülmenge der Filtervorrichtung automatisch regeln.

Vorzugsweise ist dabei vorgesehen, daß bis auf ein Membranmodul alle der Filtration des Feedstromes dienen und der jeweils eine Membranmodul mit einer Rückspülvorrichtung rückspülbar ist. Hierfür ist vorzugsweise vorgesehen, daß der Filtratraum im wesentlichen zylindrisch ausgebildet und endseitig mit Abschlußstücken versehen ist, wobei die Membranmodule aufrechtstehend im Filtratraum sich zwischen den Abschlußstücken erstrecken.

Membranen in unterschiedlichen Anwendungen benötigen unterschiedliche Reinigungsbedingungen. Durch Variation des Steuerteils auf der Anströmseite lassen sich diese in einfacher Form erreichen. So kann durch vollständiges Abschließen der Membran eine einfache Rückspülung der Membran erreicht werden. Ist das Steuerteil als Drossel ausgestattet, kann gleichzeitig eine durchströmungs-unterstützte Rückspülung eingesetzt werden.

Wird darüber hinaus an das Steuerteil beispielsweise ein Waschmedium angeschlossen, so kann damit eine fremdmedien-unterstützte Rückspülung verwirklicht werden.

Sofern vorzugsweise das im Abführraum angeordnete Steuerteil mit einem abgekröpften Rohrstück versehen ist, das unter Beibehalten eines Abstandes permanent in eine Auslaßöffnung des Filtergehäuses mündet, ist ohne Einschränkung des Retentatabführraumes eine permanente Abfuhr des abgereinigten Fluidmaterials aus der Fluidvorrichtung erreicht.

Vorzugsweise ist die Antriebswelle kopfseitig mit einer Steuerwelle verbunden, die den Zuführraum durchgreift und die an ihrem freien Ende den Antrieb aufweist, vorzugsweise in Form eines Elektromotors.

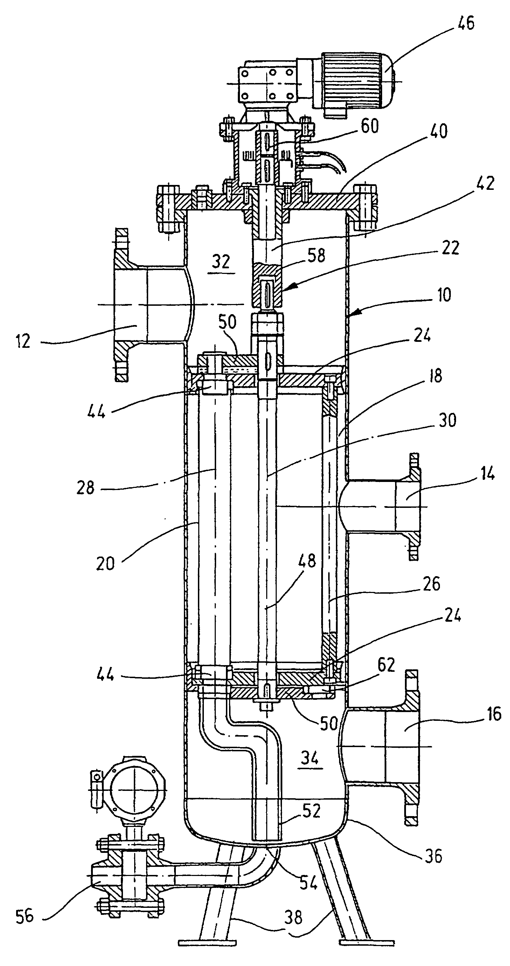

Im folgenden wird die erfindungsgemäße Filtervorrichtung anhand einer Ausführungsform nach der Zeichnung näher erläutert. Die einzige Zeichnung zeigt in prinzipieller, nicht maßstäblicher Darstellung teilweise im Längsschnitt, teilweise in Ansicht, eine Ausführungsform der Filtervorrichtung.

Die gezeigte Filtervorrichtung weist ein Filtergehäuse 10 auf, das Anschlüsse 12,14,16 für einen Feedstrom, das Permeat und das Retentat aufweist. Die Anschlüsse 12,14 und 16 sind an ihren freien Enden mit Flanschstücken zum Anschluß an eine nicht näher dargestellte Verrohrung versehen. Im übrigen münden sie im wesentlichen in einer horizontalen Achsrichtung verlaufend in das Filtergehäuse 10. Das angesprochene Filtergehäuse 10 umfaßt einen Filtratraum 18, in dem mehrere zylindrische Membranmodule 20 angeordnet sind, die parallel zueinander geschaltet sind, wie im folgenden noch näher dargestellt werden wird. In der Figur ist der einfacheren Darstellung wegen nur ein Membranmodul 20 gezeigt; es sind jedoch innerhalb des Filtratraumes 18 in radialen Abständen voneinander entlang eines Kreisumfanges mehrere Membranmodule 20 angeordnet, die in Gestalt und im Hinblick auf ihre Filtrationseigenschaften und Leistungen noch voneinander abweichen können und den verfahrenstechnischen Gegebenheiten anzupassen sind. Bei der vorliegenden Ausführungsform ist ein Membranmodul über eine als Ganzes mit 22 bezeichnete Rückspülvorrichtung rückspülbar, wohingegen alle anderen Membranmodule 20 (nicht dargestellt) der Filtration des Feedstromes dienen, der über den Anschluß 12 zuführbar ist.

Der Filtratraum 18 ist im wesentlichen zylindrisch ausgebildet und endseitig mit Abschlußstücken 24 versehen in Form zylindrischer Abschlußplatten, die, wie dies die Figur zeigt, entlang ihrer einander zugewandten Stirnseiten außenumfangsseitig über eine Abstandshalterung 26 in Form von Distanzstäben auf Abstand gehalten sind. Die Membranmodule 20 erstrecken sich des weiteren im Filtratraum 18 zwischen den plattenartigen Abschlußstücken 24 und stehen dabei im wesentlichen aufrecht mit Ausrichtung ihrer Längsachsen 28 parallel zur. Längsachse 30 der Filtervorrichtung. Der Feedstromanschluß 12 mündet in einen separaten Zuführraum 32 des Filtergehäuses 10, der Permeat- oder Filtratanschluß 14 in den Filtratraum 18 und der Retentatanschluß 16 in den separaten Abführraum 34 des Filtergehäuses 10.

Das Filtergehäuse 10 kann als schweißbare Gußkonstruktion ausgebildet sein und der Abführraum 34 ist in Blickrichtung auf die Figur gesehen nach unten hin mit einem Abschlußdeckel 36 verbunden, an den sich weiter nach unten hin zum Aufständern der Vorrichtung Ständerfüße 38 anschließen. Nach oben hin ist die Filtervorrichtung mit ihrem Filtergehäuse 10 über einen Flanschdeckel 40 zur Umgebung hin abgeschlossen. Zur Regelung der Volumenmenge am Feedstromanschluß 12 ist auf seiten des Permeatanschlusses 14 ein regelbares Drosselventil (nicht dargestellt) vorhanden, das mithin auf die Durchströmmenge zwischen Zuführraum 32 und Filtratraum 18 einwirkt.

Die als Ganzes mit 22 bezeichnete Rückspülvorrichtung ist mit einem Antriebsteil 42 versehen, das die stirnseitigen, zylindrischen Öffrungen 44 der Membranmodule 20 ansteuert, indem sie sie überdeckt oder freigibt. Das Antriebsteil 42 weist eine von einem Antrieb 46, insbesondere in Form eines Elektromotors, ansteuerbare Antriebswelle 48 auf, die den Filtratraum 18 entlang seiner Längsachse 30 durchgreift und die zum Ansteuern der Membranmodule 20 mit plattenartigen Steuerteilen 50 versehen ist. Das im Abführraum 34 angeordnete untere Steuerteil 50 ist dabei mit einem abgekröpften Rohrstück 52 versehen, das unter Beibehalten eines Abstandes permanent in eine Auslaßöffnung 54 des Filtergehäuses 10 mündet. Die Auslaßöffnung 54 ist dabei wiederum an eine entsprechende Verrohrung 56 angeschlossen, die dazu dient, die beim Rückspülen entstehenden Verunreinigungen aus dem Membranmodul 20 und mithin aus der Filtervorrichtung zu entfernen. Die Antriebswelle 48 ist kopfseitig mit einer Steuerwelle 58 verbunden, und zwar über die in der Figur gezeigte Feder-Nut-Anordnung. Die Steuerwelle 58, die wiederum über eine Feder-Nut-Anordnung mit der Abtriebswelle 60 des Antriebes 46 in Form des Elektromotors zusammenwirkt, durchgreift den Zuführraum 32 sowie mittig den Flanschdeckel 40 auf der Oberseite des Filtergehäuses 10.

Das in Blickrichtung auf die Figur gesehen obere Steuerteil 50, das plattenartig ausgebildet ist, ist in der Art eines Verlängerungsarmes mit der Antriebswelle 48 wiederum über eine Nut-Feder-Verbindung fest verbunden und auf der Oberseite und in Anlage mit demselben auf dem Abschlußstück 24 geführt. Bei der in der Figur gezeigten Anordnung überdeckt dabei dichtend das obere Steuerteil 50 die obere Öffnung 44 des Membranmoduls 20. Alle anderen, nicht näher dargestellten Öffnungen 44 der anderen Membranmodule 20, die über das obere Abschlußstück 24 in den Zuführraum 32 münden, sind dabei nicht abgedeckt. Die Abdeckung des rückzuspülenden Membranmoduls 20 über das jeweilige Steuerteil 50 kann in dichtender Anlage oder auch unter Beibehalten eines Längsabstandes erfolgen, sofern dies die Fluiddruckverhältnisse zulassen.

Das in der Figur gesehen untere Steuerteil 50 ist in der Art eines plattenartigen Doppelarmes ausgebildet und weist als Anschlußstelle für die untere Öffnung 44 des Membranmoduls 22 das Rohrstück 52 auf und in diametral einander gegenüberliegenden Positionen Durchlaßöffnungen 62, die im Filtrationsbetrieb dem Retentatabfluß aus den Filtermodulen 20 dienen, wobei das jeweilige Retentat gemeinsam über den Retentatanschluß 16 abführbar ist. Bei der gezeigten Ausführungsform dienen mithin die nicht näher dargestellten Membranmodule 20 der Cross Flow-Filtration, d.h. über den Feedstromanschluß 12 zugeführtes Medium wird über die nicht näher dargestellten oberen Einlaßöffnungen 44 der Membranmodule 20 in diese eingeleitet, wobei außenumfangsseitig das Filtrat oder Permeat in den Filtratraum 18 strömt und von dort in den Permeatanschluß 14 weitergeleitet wird. Die nicht durch die Membranseite durchfiltrierten Mediumteile werden als Retentat über den Abführraum 34 an den Retentatanschluß 16 weitergegeben. Das in der Figur gezeigte Membranmodul 20 hingegen wird bei der dahingehenden Membranfiltration im Rückspül-Modus betrieben, d.h. es findet ein Rückspülvorgang statt, wobei das im Filtratraum 18 befindliche, bei der Filtration entstehende Permeat von außen nach innen in das Innere des Membranmoduls 20 gelangt und von dort über die untere Öffnung 44 und das untere Steuerteil 50 in das Ableitungsrohrstück 52 und von da über die Auslaßöffnung 54 in die weitere Verrohrung 56. Bei der dahingehenden Lösung wird mithin immer mindestens ein Membranmodul 20 abgereinigt, wohingegen die anderen Membranmodule gleichzeitig für die Filtration eingesetzt sind. Ohne die Filtrationsleistung zu beeinträchtigen ist mithin ein Dauerbetrieb möglich, im Gegensatz zu den bekannten Anlagen, bei denen entweder nur der eine oder andere Betriebsmodus Cross-Flow oder Reinigungs-Modus nutzbar ist.

## Patentansprüche

1. Filtervorrichtung, umfassend eine Rückspülvorrichtung (22) und mehrere parallel geschaltete Filtermodule, von denen mindestens ein Modul an die Rückspülvorrichtung anschließbar ist, sowie ein Filtergehäuse (10), das Anschlüsse (12,14) für einen Feedstrom und das Permeat aufweist und einen Zuführraum (32) sowie einen Filtratraum (18) umfaßt, in den der jeweilige Feedstrom-Anschluß (12) bzw. Permeat-Anschluß (14) mündet, wobei die Filtermodule parallel in dem gemeinsamen Filtratraum (18) angeordnet sind und wobei die Rückspülvorrichtung (22) einen Antriebsteil (42) aufweist, mit dem die stirnseitigen zylindrischen Öffnungen (44) der zu reinigenden Filtermodule ansteuerbar sind, indem er diese überdeckt, während die anderen Filtermodule gleichzeitig für die Filtration freigegeben sind, **dadurch gekennzeichnet, daß** das Filtergehäuse (10) mindestens einen Retentatanschluß (16) aufweist, der in einen Abführraum (34) des Filtergehäuses (10) mündet, daß die Filtermodule als Membranmodule (20) ausgebildet sind und daß auf den Fluidaustritt am Permeat-Anschluß (14) ein regelbares Drosselventil einwirkt.

2. Filtervorrichtung nach Anspruch 1, **dadurch gekennzeichnet, daß** der Filtratraum (18) im wesentlichen zylindrisch ausgebildet und endseitig mit Abschlußstücken (24) versehen ist und daß die Membranmodule (20) aufrechtstehend im Filtratraum (18) sich zwischen den Abschlußstücken (24) erstrecken.

3. Filtervorrichtung nach Anspruch 2 **dadurch gekennzeichnet, daß** das Antriebsteil (42) eine von einem Antrieb (46) ansteuerbare Antriebswelle (48) aufweist, die den Filtratraum (18) entlang seiner Längsachse (30) durchgreift und die zum Ansteuern der Membranmodule (20) mit Steuerteilen versehen ist.

4. Filtervorrichtung nach Anspruch 3, **dadurch gekennzeichnet, daß** das im Abführraum (34) angeordnete Steuerteil (50) mit einem abgekröpften Rohrstück (52) versehen ist, das unter Beibehalten eines Abstandes permanent in eine Auslaßöffnung (54) des Filtergehäuses (10) mündet, die Bestandteil des Filtergehäuses (10) ist.

5. Filtervorrichtung nach Anspruch 3 oder 4, **dadurch gekennzeichnet, daß** die Antriebswelle (48) kopfseitig mit einer Steuerwelle (58) verbunden ist, die den Zuführraum (32) durchgreift und die an ihrem freien Ende den Antrieb (46) aufweist.

6. Filtervorrichtung nach einem der Ansprüche 3 bis 5, **dadurch gekennzeichnet, daß** über ein im Zuführraum (32) angeordnetes Steuerteil (50) eine Zuführung für ein Reinigungsmedium vorgesehen ist.

7. Filtervorrichtung nach Anspruch 6, **dadurch gekennzeichnet, daß** das Steuerteil (50) als Drossel ausgebildet ist, so daß eine durchströmungsunterstützte Rückspülung gegeben ist.

## Claims

1. Filter device comprising a back flushing device (22) and several filter modules connected in parallel, at least one of which is connectable to the back flushing device, and a filter housing (10) which has connections (12, 14) for a feed flow and the permeate and comprises a feed chamber (32) and a filtrate chamber (18) in which the respective feed flow connection (12) of the permeate connection (14) terminates, whereby the filter modules are arranged in parallel in the joint filtrate chamber (18) and whereas the back flushing device (22) has a drive part (42) by means of which the cylindrical openings (44) in the filter modules which are to be cleaned are controlled while covering them when the other filter modules are made accessible for filtration at the same time, **characterised in that** the filter housing (10) has at least one retentate connection (16) which terminates in the unloading chamber (34) in the filter housing (10), **in that** the filter modules are designed in the form of diaphragm modules (20) and **in that** the fluid outlet at the permeate connection (14) is controlled by a controllable throttle valve.

2. Filter device according to Claim 1, **characterised in that** the filtrate chamber (18) is essentially of a cylindrical design and has closing pieces (24) at its ends and **in that** the diaphragm modules (20) stand upright in the filtrate chamber (18) and extend between the closing pieces (24).

3. Filter device according to Claim 2, **characterised in that** the drive part (42) has a drive shaft (48) controlled by a drive (46), reaching into the filtrate chamber (18) along its longitudinal axis (30) and provided with control parts to control the diaphragm modules (20).

4. Filter device according to Claim 3, **characterised in that** the control part (50) arranged in the unloading chamber (34) is provided with a double-bend tube piece (52) permanently terminating in an outlet opening (54) in the filter housing (10), while maintaining a spacing, which forms part of the filter housing (10).

5. Filter device according to Claim 3 or 4, **characterised in that** the drive shaft (48) is connected to a control shaft (58) at the head end, which reaches through the feed chamber (32) and has the drive (46) at its free end.

6. Filter device according to one of the Claims 3 to 5, **characterised in that** a feed for a cleaning medium is provided via a control part (50) arranged in the feed chamber (32).

7. Filter device according to Claim 6, **characterised in that** the control part (50) is designed in the form of a throttle to provide a through-flow supported back flushing action.

## Revendications

1. Dispositif de filtration, comprenant un dispositif de rétrolavage (22) et plusieurs modules de filtration montés en parallèle, dont au moins un module peut être raccordé au dispositif de rétrolavage, ainsi qu'un carter de filtre (10), qui comprend des raccordements (12, 14) pour un courant d'alimentation et le perméat et comporte un compartiment d'alimentation (32) ainsi qu'un compartiment pour filtrat (18), dans lequel débouche le raccordement pour le courant d'alimentation (12) correspondant et/ou le raccordement pour perméat (14), les modules de filtration étant disposés parallèlement dans le compartiment pour filtrat (18) commun et le dispositif de rétrolavage (22) comprenant un élément d'entraînement(42), grâce auquel les ouvertures (44) cylindriques frontales des modules de filtration nettoyants peuvent être commandées, en ce qu'il recouvre celles-ci, tandis que les autres modules de filtration sont simultanément libérés pour la filtration, **caractérisé en ce que** le carter de filtre (10) comprend au moins un raccordement pour rétentat (16), qui débouche dans un compartiment d'évacuation (34) du carter de filtre (10), que les modules de filtration sont conçus comme des modules membranaires (20) et qu'une vanne papillon réglable agit sur l'écoulement de fluide au niveau du raccordement pour perméat (14).

2. Dispositif de filtration selon la revendication 1, **caractérisé en ce que** le compartiment pour filtrat (18) est sensiblement conçu de manière cylindrique et pourvu à son extrémité d'embouts (24), et que les modules membranaires (20) s'étendent verticalement dans le compartiment pour filtrat (18) entre les embouts (24).

3. Dispositif de filtration selon la revendication 2, **caractérisé en ce que** l'élément d'entraînement(42) comprend un arbre d'entraînement (48) pouvant être commandé par un mécanisme d'entraînement (46), qui traverse le carter de filtre (18) le long de son axe longitudinal (30) et qui est pourvu d'éléments de commande permettant de commander les modules membranaires (20).

4. Dispositif de filtration selon la revendication 3, **caractérisé en ce que** l'élément de commande (50) disposé dans le compartiment d'évacuation (34) est pourvu d'un segment de tuyau (52) coudé, qui débouche, tout en maintenant une certaine distance, en permanence dans un orifice d'évacuation (54) du carter de filtre (10), orifice qui est un élément du carter de filtre (10).

5. Dispositif de filtration selon la revendication 3 ou 4, **caractérisé en ce que** l'arbre d'entraînement (48) est relié au niveau de sa tête à un arbre de commande (58), qui traverse le compartiment d'alimentation (32) et qui comprend à son extrémité libre le mécanisme d'entraînement (46).

6. Dispositif de filtration selon l'une des revendications 3 à 5, **caractérisé en ce qu'**une alimentation pour un médium de nettoyage est prévue sur un élément de commande (50) disposé dans le compartiment d'alimentation (32).

7. Dispositif de filtration selon la revendication 6, **caractérisé en ce que** l'élément de commande (50) est conçu comme un étranglement, de telle sorte qu'un rétrolavage supporté par un courant est effectué.
